# EUROPÄISCHE PATENTANMELDUNG

(11) **EP 2 194 095 A1**
(43) Veröffentlichungstag der Anmeldung: **09.06.2010**
(21) Anmeldenummer: 09177841.5
(22) Anmeldetag: 03.12.2009
(51) Int. Cl.: C08L 33/02, C08L 79/02, C09D 133/02, C09D 179/02

(54) **Polyethylenimin und Poly(meth)acrylsaeure enthaltendes Beschichtungsgemisch**

(30) Priorität: 05.12.2008 EP 08170833
(71) Anmelder: BASF SE, 67056 Ludwigshafen (DE)
(72) Erfinder: Hüffer, Stephan Dr., 67063 Ludwigshafen (DE); Witteler, Helmut Dr., 67157 Wachenheim (DE); Djenadi, Farid, 67063 Ludwigshafen (DE)
(74) Vertreter: Isenbruck, Günter

(57) **Zusammenfassung**

Ein Gemisch, enthaltend Polyethylenimin, Poly(meth)acrylsäure oder deren Salze und gegebenenfalls für Beschichtungsmassen oder Anstrichfarben übliche Hilfs- und Zusatzstoffe sowie Lösungsmittel, wird als Korrosionsschutz zur Beschichtung von Kohlenstoffstahl/Schwarzstahl eingesetzt.

## Beschreibung

Die Erfindung betrifft ein Beschichtungsgemisch, insbesondere für Stahlbleche aus Kohlenstoffstahl oder Schwarzstahl.

Der Korrosionsschutz bei Eisen und Stählen kann nach unterschiedlichen Methoden erfolgen. Weit verbreitet ist das Verzinken von Stahl zum Korrosionsschutz. Dieses Verfahren wird insbesondere im Automobilbau häufig angewendet. Ferner ist es möglich, Schutzanstriche auf Polymerbasis auf die Stahloberfläche aufzubringen. Hierbei kommen insbesondere Lackierungen und speziell Rostschutzlackierungen in Betracht.

Der Einsatz von Polyethyleniminen als Korrosionsinhibitoren ist beispielsweise aus Corrosion Science 37, Seiten 975 bis 985 (1995) bekannt. Auch zur Beschichtung von Metallblechen können sie, zusammen mit anderen Materialien, eingesetzt werden. Beispielsweise beschreibt die US 6,448,313 wässrige Zusammensetzungen, die Polyvinylalkohol enthalten und zudem Polyethylenimin enthalten können, zur zeitweisen Schutzbeschichtung von Metallblechen.

Aufgabe der vorliegenden Erfindung ist die Bereitstellung von Korrosionsinhibitoren zur Beschichtung von (unbehandelten) Eisen- und Stahlblechen, -profilen, -rohren oder - formkörpern, die in einfacher Weise auf die Metalloberfläche aufgebracht werden können und einen hohen Korrosionsschutz sicherstellen.

Die Aufgabe wird erfindungsgemäß gelöst durch ein Gemisch, enthaltend Polyethylenimin, Poly(meth)acrylsäure oder deren Salze und gegebenenfalls für Beschichtungsmassen oder Anstrichfarben übliche Hilfs- und Zusatzstoffe sowie Lösungsmittel.

Es wurde erfindungsgemäß gefunden, dass Gemische aus Polyethylenimin und Poly(meth)acrylsäure oder deren Salzen in hervorragender Weise zur korrosionsschützenden Beschichtung von Eisen- oder Stahlgegenständen geeignet sind.

Die Gemische enthalten Polyethylenimin, Poly(meth)acrylsäure oder deren Salze und gegebenenfalls für Beschichtungsmassen oder Anstrichfarben übliche Hilfs- und Zusatzstoffe sowie (gegebenenfalls) Lösungsmittel. Dabei kann das Gemisch auch aus den genannten Inhaltsstoffen bestehen. Vorzugsweise enthält das Gemisch keinen Polyvinylalkohol. Gemäß einer anderen Ausführungsform der Erfindung enthält das Gemisch, abgesehen vom Polyethylenimin und Poly(meth)acrylsäure oder deren Salzen im Wesentlichen keine weiteren Kunststoffe oder Polymere. Dabei können unter den Hilfs- und Zusatzstoffen auch weiterhin polymere Strukturen vorliegen, sofern diese nicht primär als Beschichtungsmaterial zur Abdeckung der Metalloberfläche eingesetzt sind. Typischerweise liegen diese zusätzlichen polymeren Strukturen in Maximalmengen von jeweils maximal 5 Gew.-%, vorzugsweise maximal 1 Gew.-% in den erfindungsgemäßen Gemischen vor. Vorzugsweise sind nur Polyethylenimin und Poly(meth)acrylsäure oder deren Salze als Beschichtungs-bildende Polymere in den Gemischen enthalten.

Die Erfindung betrifft auch Anstrichfarben oder -lacke und Beschichtungsmassen oder -mittel, die die erfindungsgemäßen Gemische enthalten.

Erfindungsgemäß eingesetztes Polyethylenimin weist eine verzweigte Struktur auf, die durch das Syntheseverfahren bedingt ist. Es kann auf das Stichwort "Polyethylenimin" in Römpp Chemielexikon, 9. Auflage, verwiesen werden. Das Polyethylenimin weist vorzugsweise ein gewichtsmittleres Molekulargewicht im Bereich von 800 bis 750.000, besonders bevorzugt 900 bis 50.000, insbesondere 1.000 bis 5.000 auf. Es kann dabei mit einem Wassergehalt von 1 bis 95 Gew.-% eingesetzt werden und damit als Feststoff, als wässriges Gemisch oder als wässrige Lösung. Der pH-Wert einer erfindungsgemäß einsetzbaren wässrigen Polyethyleniminlösung beträgt vorzugsweise 7 bis 13, besonders bevorzugt 10 bis 12. Geeignete Polyethylenimine sind unter der Marke Lupasol^{®} von der BASF SE erhältlich. Der pH-Wert der Polyethylenimine kann beispielsweise durch Zusatz organischer Säuren wie Essigsäure eingestellt werden.

Der Begriff "Poly(meth)acrylsäure" beschreibt Polyacrylsäure und Polymethacrylsäure. Bevorzugt wird Polyacrylsäure oder ein Salz der Polyacrylsäure eingesetzt. Dabei kann die Poly(meth)acrylsäure ganz oder teilweise durch Laugen neutralisiert sein. Typischerweise liegt die Poly(meth)acrylsäure in teilweise oder ganz neutralisierter Form vor, neutralisiert durch Natronlauge, Kalilauge oder Ammoniak, insbesondere durch Natronlauge. Die Poly(meth)acrylsäure oder deren Salze können einen Wassergehalt von 3 bis 95 Gew.-% aufweisen (jeweils bezogen auf das Gemisch aus Poly(meth)acrylsäure oder deren Salz und Wasser). Geeignete Polyacrylsäuren oder deren Salze sind unter der Marke Sokalan^{®} von BASF SE erhältlich. Eine wässrige Poly(meth)acrylsäurelösung weist vorzugsweise einen pH-Wert im Bereich von 3 bis 10, besonders bevorzugt 3 bis 8 auf.

Die erfindungsgemäß bevorzugten Poly(meth)acrylsäuren oder deren Salze weisen ein gewichtsmittleres Molekulargewicht von 1000 bis 350.000, besonders bevorzugt 2.000 bis 250.000, insbesondere 5.000 bis 200.000 auf.

Lupasol G 35 der BASF SE weist beispielsweise ein gewichtsmittleres Molekulargewicht von 2000 g/mol auf und zeigt als 50 gew.-%ige wässrige Lösung einen pH-Wert von 11. Sokalan TA 80 S der BASF SE weist ein gewichtsmittleres Molekulargewicht von 100.000 g/mol auf und hat als 35 gew.-%ige wässrige Lösung einen pH-Wert von 2. Sokalan TA 30 BN weist ein gewichtsmittleres Molekulargewicht von 8.000 auf und zeigt als 49 gew.-%ige wässrige Lösung einen pH-Wert von 4. Sokalan PA 30 weist ein gewichtsmittleres Molekulargewicht von 8.000 auf und zeigt als 45 gew.-%ige wässrige Lösung einen pH-Wert von 8.

Dabei ist das Polyethylenimin ein verzweigtes Polyethylenimin, während die Polyacrylsäure eine lineare Polyacrylsäure ist.

Bevorzugt sind die gewichtsmittleren Molekulargewichte des Polyethylenimins und der Poly(meth)acrylsäuren oder deren Salze um maximal den Faktor 20, besonders bevorzugt maximal den Faktor 10, insbesondere maximal den Faktor 5 voneinander verschieden.

Polyethylenimin und Poly(meth)acrylsäure oder deren Salze werden vorzugsweise im Gewichtsverhältnis von 20 bis 60 Gew.-%, besonders bevorzugt 30 bis 50 Gew.-%, speziell etwa 40 Gew.-% Polyethylenimin zu 40 bis 80 Gew.-%, besonders bevorzugt 50 bis 70 Gew.-%, insbesondere etwa 60 Gew.-% Poly(meth)acrylsäure oder deren Salze eingesetzt. Häufig ist es bevorzugt, Äquivalentmengen an Polyethylenimin und Poly(meth)acrylsäure einzusetzen, bezogen auf die jeweiligen Endgruppen.

Das erfindungsgemäße Gemisch weist vorzugsweise einen Wasseranteil von 0 bis 95 Gew.-%, besonders bevorzugt 50 bis 93 Gew.-%, insbesondere 75 bis 90 Gew.-% auf, bezogen auf das gesamte Gemisch.

Neben Polyethylenimin und Poly(meth)acrylsäure oder deren Salzen als Hauptinhaltsstoffe und Lösungsmittel, insbesondere wässriges Lösungsmittel, speziell Wasser, können weitere Hilfs- und Zusatzstoffe in den üblichen geringen Mengen vorliegen. Die Hilfs- und Zusatzstoffe sind die aus Beschichtungsmassen oder Anstrichfarben bekannten Hilfs- und Zusatzstoffe. Hierbei kann es sich beispielsweise um oberflächenaktive Substanzen (Tenside), Netzmittel, zusätzliche niedermolekulare Korrosionsinhibitoren wie Alkanolamine, Viskositäts- oder Rheologie-Modifikatoren, Verdicker, Pigmente, Farbstoffe, anorganische Füllstoffe usw. handeln.

Geeignete Tenside sind in der US 6,448,313 in Spalte 2, Zeile 31 bis Spalte 3, Zeile 18 beschrieben. Zusätzliche Korrosionsinhibitoren sind in US 6,448,313 in Spalte 3, Zeile 19 bis Spalte 4, Zeile 19 beschrieben. Viskositäts- oder Rheologie-Modifikatoren und Verdicker sind beispielsweise in US 6,448,313 in Spalte 4, Zeile 36 bis Spalte 5, Zeile 10 beschrieben. Wassermischbare organische Lösungsmittel wie ein- und mehrwertige Alkohole sind in US 6,448,313 in Spalte 4, Zeilen 20 bis 36 beschrieben.

Füllstoffe können beispielsweise mineralische Füllstoffe wie anorganische Metalloxide sein. Auch Glasfasern, Kohlenstofffasern und ähnliche Verstärkungsstoffe können als Zusatzstoffe mit verwendet werden.

Die Herstellung der erfindungsgemäßen Gemische erfolgt durch mechanisches Vermischen der festen oder fließfähigen Inhaltsstoffe. Sofern die Zusammensetzungen wasserfrei oder wasserarm sind, können sie beispielsweise in Knetern oder Extrudern vermischt werden. Wässrige Lösungen können mit üblichen Mischern für fluide Systeme gemischt werden.

Bevorzugt werden Polyethylenimin, Poly(meth)acrylsäure oder deren Salze und Wasser in solchen Mengen eingesetzt, dass sich eine homogen gemischte Lösung ergibt.

Ohne an eine Theorie gebunden zu sein, wird davon ausgegangen, dass Polyethylenimin und Poly(meth)acrylsäure einen Polykomplex bilden. Die dreidimensionale Überstruktur des Polykomplexes hängt vom pH-Wert ab. Die Ausbildung von Amidbindungen wird üblicherweise nicht beobachtet. Beispielsweise kann bei saurem pH-Wert die lineare Polyacrylsäure als Zufallsknäuel vorliegen, das von geladenen Polyethylenimin-Makromolekülen umgeben ist. Bei basischen pH-Werten kann sich ein langgestrecktes Knäuel ergeben, das mit Polyethylenimin-Salzbindungen eingeht. Die Polyethylenimin/Poly(meth)acrylsäure-komplexe sind wasserlöslich, sodass homogene wässrige Lösungen der erfindungsgemäßen Gemische zugänglich sind.

Bevorzugt werden Polyethylenimin und Poly(meth)acrylsäure in solchen Mengen eingesetzt, dass eine Salzbildung oder Polykomplexbildung eintritt.

Die erfindungsgemäßen Gemische werden zur Beschichtung von Metallen vorzugsweise in bei Raumtemperatur fließfähiger Form eingesetzt. Sie sind daher vorzugsweise bei Raumtemperatur (22 °C) pastös oder fließfähig.

Die erfindungsgemäßen Gemische werden bevorzugt zum Beschichten von Eisen- oder Stahlblechen, -profilen, -rohren oder -formkörpern eingesetzt. Sie dienen dabei vornehmlich zum Korrosionsschutz. Insbesondere werden sie zur Beschichtung von Kohlenstoffstahl/Schwarzstahl eingesetzt, der an sich nicht korrosionsbeständig ist im Unterschied zu Edelstahl. Bevorzugt werden sie auf Eisen oder Stahl aufgebracht, dass nicht zuvor korrosionsgeschützt wurde, beispielsweise durch Verzinken. Auch Edelstähle können durch die erfindungsgemäßen Gemische noch besser gegen Korrosion, beispielsweise Chlorid-Korrosion geschützt werden. Besonders bevorzugt wird erfindungsgemäß unverzinkter Stahl mit dem erfindungsgemäßen Gemisch gegen Korrosion geschützt.

Die Erfindung betrifft auch ein Eisen- oder Stahlblech, -profil, -rohr oder entsprechenden Formkörper mit einer oberflächlichen Beschichtung auf mindestens 30 % der Oberfläche, vorzugsweise mindestens 50 % der Oberfläche, insbesondere mindestens 80 % der Oberfläche aus einem wie vorstehend beschriebenen Gemisch. Die Schichtdicke liegt dabei vorzugsweise im Bereich von 200 nm bis 25 µm, besonders bevorzugt 0,5 nm bis 10 µm. Das Aufbringen des Gemisches auf die Metalloberfläche kann durch beliebige geeignete Verfahren erfolgen, beispielsweise durch Aufrakeln, Aufsprühen oder Tauchbeschichtung. Beispielsweise kann ein Stahlblech in ein flüssiges erfindungsgemäßes Gemisch eingetaucht und sodann mit einer Quetschwalze auf die gewünschte Schichtdicke abgequetscht werden.

In aller Regel schließt sich eine Temperaturbehandlung des beschichteten Eisen- oder Stahlmaterials an, um Lösungsmittel aus dem Gemisch zu entfernen und das Anhaften der Beschichtung zu verbessern. Das Entfernen des wässrigen Lösungsmittels kann beispielsweise durch Gefriertrocknen oder durch Aufheizen auf Temperaturen von bis zu 250 °C erfolgen. Typischerweise wird für Zeiträume von einer Minute bis mehreren Minuten auf eine Temperatur im Bereich von 50 bis 200 °C erwärmt. Beispielsweise wird für eine Schichtdicke von 2 bis 4 µm für eine Minute auf 80 °C erwärmt.

Vor der Beschichtung kann die Eisen- oder Stahloberfläche vorbereitet werden. Vorzugsweise wird sie mildalkalisch gereinigt und gegebenenfalls entfettet. Dies kann durch ein Tauchbad oder auch ein Ultraschallbad erfolgen.

Auf die erfindungsgemäße Korrosionsschutzbeschichtung können übliche weitere Beschichtungen aufgebracht werden, beispielsweise Lackierungen oder andere Ornamentierungen, und auch das Aufbringen von Klebeverbindungen ist möglich.

Die erfindungsgemäß zu beschichtenden Bleche, Profile, Rohre oder Formkörper können aus einer Vielzahl von Anwendungsgebieten stammen. Typischerweise werden unverzinkte Stahlbleche bei der Herstellung von LKW und Landmaschinen wie auch bei der Herstellung von Bau- oder Stahlträgern, Stahlgitternetzen oder Stahlgitter-Armierungen für den Bausektor eingesetzt. Insbesondere für Betonarmierungen aus Stahlgitternetzen oder Stahlgitterfiligrannetzen oder auch für Stahlträger zur Betonverstärkung sind die erfindungsgemäßen Gemische mit großem Vorteil einsetzbar. Die Haltbarkeit der Stahlarmierungen in stahlarmierten Betonteilen kann damit erheblich erhöht werden.

Ferner ist es möglich, einen wieder entfernbaren Transportschutz auf Eisen- oder Stahloberflächen aufzubringen. Ein Beispiel ist ein Transportschutz für Stahlcoils, durch den die Stahlcoils beim Transport bis zur Endanwendung vor äußeren Einflüssen und Korrosion geschützt werden. Durch Reinigungsverfahren oder mechanischen Abtrag können die erfindungsgemäßen Beschichtungen dann wieder von den Eisen- oder Stahloberflächen entfernt werden.

Die Erfindung wird durch die nachstehenden Beispiele näher erläutert.

### Beispiele

### Beispiel 1

Zur Beschichtung wurde ein Gemisch aus 4,5 g Lupasol G 35 der BASF SE (50 Gew.-%ige wässrige Lösung), 0,5 g Sokalan PA 30 der BASF SE (35 Gew.-ige wässrige Lösung) mit 5 g Wasser eingesetzt. Durch einen Quadrupelfilmapplikator von Erichsen wurde eine dünne Schicht des Gemisches auf zwei Gardobond^{®}-Platten mit Schichtdicke von 60 µm aufgebracht. Die Kohlenstoffstahlplatten werden von Chemmetall AG hergestellt und unter der Bezeichnung Gardobond^{®} OC vertrieben. Die erste Platte wurde sodann bei Raumtemperatur getrocknet, die zweite Platte bei 120 °C in einem Ofen für 1 Stunde.

Die Korrosionsbeständigkeit wurde durch den Salzsprühtest in einer Salzsprühkammer innerhalb von 24 Stunden bestimmt. Der Salzspraytest ist eine standardisierte Testmethode um die Korrosionsbeständigkeit von beschichteten Proben zu untersuchen. Es wird eine geschlossene Testkammer eingesetzt, in die durch eine Düse eine Salzwasserlösung eingesprüht wird. Tests unter Einsatz einer Natriumchloridlösung sind als NS (Neutral Saltspray) bekannt. Gemäß ISO 9227 wird die Testzeit in Stunden angegeben, während der keine Korrosionsprodukte auftraten.

Zudem wurden die Proben in einer Klimakammer untersucht, um die Widerstandsfähigkeit gegen Feuchtigkeit zu untersuchen. Die Untersuchung erfolgte gemäß I-SO 6270-2, Teil 2, 2005. Die Untersuchung erfolgte bei einer Temperatur von 40 °C. Die Untersuchung der Korrosionsbeständigkeit erfolgte dann gemäß ISO 10289 (2001). Die Platten wurden gemäß Appendix B der ISO 10289 beurteilt.

Zudem wurde der Kontaktwinkel von Wasser bestimmt. Die unbehandelte Platte zeigte einen Kontaktwinkel von 49 °, die bei Raumtemperatur getrocknete Platte von 14,14 °, die bei 120 °C für eine Stunde im Ofen getrocknete Probe von 23,07 °.

Im Ergebnis zeigte sich ein wesentlich verbesserter Korrosionsschutz durch Auftrag des erfindungsgemäßen Gemischs.

### Beispiel 2

Es wurde wie in Beispiel 1 beschichtet, jedoch wurden jeweils 5 g Lupasol G 35 und Sokalan PA 30 und 9 g Wasser eingesetzt. Die Beschichtung erfolgte wie in Beispiel 1 beschrieben mit einer Schichtdicke von 100 µm. Nach der Beschichtung wurden die Platten bei 40 °C in einem Ofen für 3 Stunden getrocknet. Alternativ wurde ein Schichtdicke von 20 bis 25 µm aufgebracht, und mit Hilfe von Quetschrollen auf eine letztendliche Schichtdicke von 2 bis 4 µm reduziert.

Die Trocknung erfolgte für 1 Minute in einem belüfteten Ofen bei 80 °C.

Die Korrosionstests durch Salzsprühen und Feuchtigkeit zeigten wiederum eine erheblich verbesserte Korrosionsbeständigkeit gegenüber einer unbehandelten Stahlplatte.

## Patentansprüche

1. Gemisch, enthaltend Polyethylenimin, Poly(meth)acrylsäure oder deren Salze und gegebenenfalls für Beschichtungsmassen oder Anstrichfarben übliche Hilfs- und Zusatzstoffe sowie Lösungsmittel.

2. Gemisch nach Anspruch 1, **dadurch gekennzeichnet, dass** Polyethylenimin in Form einer wässrigen Mischung mit einem Wassergehalt im Bereich von 1 bis 95 Gew.-%, bezogen auf die Mischung, und Poly(meth)acrylsäure und deren Salze in Form einer wässrigen Mischung mit einem Wassergehalt von 3 bis 95 Gew.-%, bezogen auf die Mischung, eingesetzt werden.

3. Gemisch nach Anspruch 1 oder 2, **dadurch gekennzeichnet, dass** im Gemisch Polyethylenimin und Poly(meth)acrylsäure oder deren Salze im Gewichtsverhältnis von 20 bis 60 Gew.-& Polyethylenimin und 40 bis 80 Gew.-% Poly(meth)acryläsure oder deren Salze vorliegen.

4. Gemisch nach einem der Ansprüche 1 bis 3, **dadurch gekennzeichnet, dass** es ein Wasseranteil von 50 bis 93 Gew.-%, bezogen auf das Gemisch, aufweist.

5. Gemisch nach einem der Ansprüche 1 bis 4, **dadurch gekennzeichnet, dass** das gewichtsmittlere Molekulargewicht des Polyethylenimins 800 bis 750.000 und der Poly(meth)acrylsäure oder deren Salze 1.000 bis 350.000 beträgt.

6. Gemisch nach einem der Ansprüche 1 bis 5, **dadurch gekennzeichnet, dass** die gewichtsmittleren Molekulargewichte des Polyethylenimins und der Poly(meth)acrylsäure oder deren Salze um maximal den Faktor 20 voneinander abweichen.

7. Verfahren zur Herstellung von Gemischen nach einem der Ansprüche 1 bis 6 durch mechanisches Vermischen der festen oder fließfähigen Inhaltsstoffe.

8. Verwendung von Gemischen nach einem der Ansprüche 1 bis 6 zum Beschichten von Eisen- oder Stahlblechen, -profilen, -rohren oder-formkörpern.

9. Verwendung nach Anspruch 8 zum Korrosionsschutz.

10. Verwendung nach Anspruch 8 oder 9 zur Beschichtung von Kohlenstoffstahl/Schwarzstahl.

11. Eisen- oder Stahlblech, -profil, -rohr oder -formkörper mit einer oberflächlichen Beschichtung auf mindestens 30 % der Oberfläche aus einem Gemisch gemäß einem der Ansprüche 1 bis 5, vorzugsweise in einer Schichtdicke im Bereich von 200 nm bis 25 µm.
